# FASCICULE DE BREVET EUROPEEN

(11) **EP 2 300 888 B1**
(45) Date de publication et mention de la délivrance du brevet: **26.03.2014**
(21) Numéro de dépôt: 09769472.3
(22) Date de dépôt: 22.05.2009
(51) Int. Cl.: G05D 1/02

(54) **DISPOSITIF DE COMMANDE D'APPAREIL(S) MOBILE(S) AUTOPROPULSÉ(S)**
VERFAHREN ZUM STEUERN VON SELBSTANGETRIEBENEN MOBILVORRICHTUNG(EN)
METHOD FOR CONTROLLING SELF-PROPELLED MOBILE APPARATUS(ES)

(30) Priorité: 02.06.2008 FR 0803004
(43) Date de publication de la demande: 30.03.2011
(73) Titulaire: Nav On Time, 31100 Toulouse (FR)
(72) Inventeur: Morey épouse Poncelet, Michèle, F-31470 Fonsorbes (FR)
(74) Mandataire: Cabinet BARRE LAFORGUE & associés
(86) Numéro de dépôt international: PCT/FR2009/050952
(87) Numéro de publication internationale: WO 2009/156631

(56) Documents cités:
- EP-A- 0 522 829
- US-A- 6 112 143
- US-A- 6 128 574
- US-A1- 2005 027 406
- US-A1- 2006 214 845

## Description

L'invention concerne un dispositif de commande d'appareil(s) mobile(s) autopropulsé(s), et plus particulièrement un dispositif mettant en oeuvre la localisation par satellites d'un (ou de multiples) appareil(s) mobile(s) en vue de la commande et le cas échéant, de la coordination de leurs déplacements.

On connaît dans le domaine agricole, des tracteurs ou autres engins faisant usage de la localisation par satellite, par exemple du système de satellites connu sous le nom de GPS (Global Positioning System) pour améliorer le guidage des engins lors de leur travail dans les champs.

Par exemple, le document US 6,128,574 décrit un procédé de planification et d'optimisation de la trajectoire d'un engin agricole utilisant le GPS différentiel, dans lequel les erreurs de position inhérentes au système GPS sont corrigées par l'utilisation d'une base fixe placée sur une position connue. L'engin comporte un premier récepteur pour recevoir les signaux GPS lui permettant de calculer sa position et un second récepteur pour recevoir une correction de position émise par la base fixe. L'engin comporte également un calculateur permettant de commander ses organes de direction en fonction de sa position corrigée et d'une stratégie de parcours du terrain préparée à l'avance et enregistrée sur le calculateur. Cependant, les moyens électroniques embarqués dans ces engins sont lourds, très consommateurs d'énergie et extrêmement coûteux et ne sont justifiés que parce que les engins eux-mêmes sont d'un coût très élevé.

Pour des appareils mobiles de taille et de coût plus réduits, on connaît du document WO 99/12793 un chariot de golf autopropulsé qui comporte un calculateur embarqué contenant une carte du terrain de golf et des règles de navigation sur celui-ci. Le chariot utilise le GPS différentiel pour la détermination de sa position. Cependant, dans des situations où cette détermination peut être compromise, il doit être fait usage d'autres moyens de guidage tels que câbles enterrés ou même la main de l'homme. Malgré la simplification de l'électronique embarquée par rapport aux engins agricoles, ce chariot reste excessivement coûteux.

Le document EP- 0 522 829 A2 est aussi considéré comme représentant l'état de la technique.

On utilisera dans la suite de la description le terme GNSS (Global Navigation Satellite System - système global de navigation par satellite), pour désigner en général un système de localisation par satellite, cette acronyme englobant toute constellation complète, comme GPS (USA), GLONASS (Russe), GALILEO (Europe), COMPASS (Chine) et leurs augmentations EGNOS(Europe), WAAS(USA), MSAS (Japon), GAGAN (Inde) actuelles et à venir.

Il subsiste donc un besoin pour un dispositif de commande d'appareil(s) mobile(s) autopropulsé(s) qui permette une simplification de l'électronique embarquée sur les appareils mobiles tout en préservant et améliorant l'autonomie du dispositif pour éviter au maximum l'intervention humaine.

En outre, lorsque l'on vise un marché grand public comme les tondeuses à gazon autonomes par exemple, il est nécessaire d'obtenir ces avantages pour un coût raisonnable et sans exiger une mise en oeuvre trop lourde comme le serait l'enfouissement de câbles pour guider ou limiter le déplacement des appareils mobiles. De plus, il est avantageux, sinon nécessaire, de conserver une large possibilité de modification des parcours et comportements de ces appareils mobiles, ce que ne permet pas une solution faisant appel à une infrastructure figée telle que les câbles enterrés.

Pour ce faire, l'invention concerne un dispositif de commande d'appareil(s) mobile(s) autopropulsé(s), comportant une station de base fixe, équipée d'un récepteur de système de localisation par satellites, dit récepteur GNSS fixe et d'un émetteur-récepteur radiofréquence adapté pour pouvoir communiquer avec au moins un appareil mobile ; au moins un appareil mobile, comprenant une source d'énergie, des moyens de déplacement, un récepteur de système de localisation par satellites, dit récepteur GNSS mobile, et un émetteur-récepteur radiofréquence adapté pour communiquer avec ladite station de base ; des moyens de mémoire contenant des données représentatives de la définition topographique d'un terrain parcouru par au moins un appareil mobile et de la position de la station de base sur ou au voisinage dudit terrain. Le dispositif de commande est caractérisé en ce que chaque appareil mobile est adapté pour transmettre à la station de base des informations, dites informations GNSS brutes, représentatives du contenu et des caractéristiques des signaux des satellites reçus par son récepteur GNSS mobile et recevoir une commande de déplacement et en ce que la station de base comprend :
- un module, dit module de consignes, comprenant lesdits moyens de mémoire et adapté pour élaborer une stratégie de parcours du terrain par ledit (lesdits) appareil(s) mobile(s) en fonction de la définition topographique du terrain et de paramètres d'une mission à accomplir par l'appareil mobile,
- un module, dit module de positionnement, adapté pour calculer une position instantanée dudit appareil mobile à partir des informations GNSS brutes transmises par l'appareil mobile, des informations représentatives du contenu et des caractéristiques des signaux des satellites reçus par le récepteur GNSS fixe et de la position de la station de base et,
- un module, dit module de commande, adapté pour déterminer une commande de déplacement de l'appareil mobile en fonction au moins de la position instantanée de celui-ci et de la stratégie de parcours élaborée par le module de consignes, et pour transmettre ladite commande de déplacement audit appareil mobile.

Ainsi, avec un dispositif selon l'invention, l'appareil mobile n'a plus à effectuer tous les calculs dont avaient besoin les appareils mobiles de la technique antérieure. Les calculs de position GNSS, de correction de celle-ci et la détermination de la commande de déplacement ne sont plus traités dans l'appareil mobile mais par la station de base qui peut être équipée de moyens de calcul plus performants et bien moins couteux puisqu'ils n'ont plus besoin d'être embarqués dans l'appareil mobile. De même, les données représentatives du terrain parcouru par les appareils mobiles et les paramètres de mission ne sont plus dupliquées dans chacun d'entre eux mais centralisées dans la station de base, simplifiant ainsi les mises à jour. L'électronique embarquée dans l'appareil mobile est de ce fait plus simple, plus légère, plus fiable. Elle consomme moins d'énergie électrique donc l'autonomie de la source d'énergie embarquée dans l'appareil mobile s'en voit accrue.

Avantageusement et selon l'invention, le dispositif de commande comprend en outre un appareil de relevé de la définition topographique du terrain, comportant un récepteur GNSS, un émetteur-récepteur adapté pour pouvoir communiquer avec la station de base et au moins un interrupteur adapté pour commander l'exécution d'un relevé de la position de l'appareil de relevé par la station de base. L'appareil de relevé peut être un appareil spécifique, portatif, ou bien un des appareils mobiles comportant des moyens propres à commander un fonctionnement dudit appareil mobile en tant qu'appareil de relevé, à en informer la station de base et à commander l'exécution d'un relevé de sa position par la station de base. La définition topographique du terrain peut ainsi être établie par un relevé sur place, utilisant des moyens identiques ou très similaires à ceux qui seront utilisés en exploitation. Ainsi la carte du terrain peut être plus précise que celle qui pourrait être faite à partir d'un relevé cadastral ou d'une photographie aérienne, sans pour autant exclure ces moyens, seuls ou en combinaison avec un relevé obtenu par l'appareil de relevé.

Avantageusement et selon l'invention, la définition topographique du terrain comprend plusieurs zones distinctes et le module de commande est adapté pour prendre en compte des règles de déplacement définies dans les paramètres de mission pour chacune des zones. Le déplacement de l'appareil mobile peut ainsi être interdit ou limité sous certaines conditions dans des zones particulières.

Avantageusement et selon l'invention, chaque appareil mobile comporte au moins un actionneur apte à effectuer différents travaux et le module de commande transmet à l'appareil mobile un indicateur du travail à effectuer avec la commande de déplacement. Par exemple, en combinaison avec les zones précédemment définies, un appareil mobile ayant des fonctions de tondeuse à gazon pourrait être apte à tondre selon différentes hauteurs d'herbe, ou selon des axes orthogonaux (horizontalement et/ou verticalement) pour délimiter des bordures.

Avantageusement et selon l'invention, la station de base comprend des moyens de connexion à un réseau informatique et un serveur programmé pour permettre, localement ou à distance, l'établissement et la mise à jour de la définition topographique du terrain ou des paramètres de mission ainsi que la maintenance du dispositif. La station de base peut être ainsi raccordée au réseau domestique du propriétaire du terrain qui a donc la possibilité de visualiser l'état du système et le cas échéant, de modifier certains paramètres. En outre, le réseau domestique peut être relié à l'internet et permettre aussi à un prestataire de service d'accéder à distance à la station de base et à l'ensemble du dispositif pour en modifier les paramètres ou en effectuer la maintenance.

Avantageusement et selon l'invention, la station de base comprend en outre des moyens de branchement coopérant avec des moyens de branchement conjugués portés par chaque appareil mobile adaptés pour pouvoir assurer la recharge de la source d'énergie des appareils mobiles, et la stratégie de parcours élaborée par le module de consignes tenant compte d'un état de ladite source d'énergie pour optimiser les déplacements de l'appareil mobile. Cette disposition pratique permet à la station de base de gérer la charge de la source d'énergie embarquée dans l'appareil mobile, particulièrement s'il s'agit de batteries nécessitant un contrôle de charge particulier et d'éviter qu'un appareil mobile ne se trouve immobilisé en panne d'énergie loin de la station de base, nécessitant ainsi l'intervention d'un opérateur humain.

Avantageusement et selon l'invention, les moyens de déplacement de l'appareil mobile comprennent deux roues motrices latérales indépendantes placées de part et d'autre d'un axe de déplacement de l'appareil mobile, entrainées chacune par un moteur électrique et en ce que la commande de déplacement émise par la station de base comprend une commande de puissance appliquée à chaque moteur. Ainsi l'électronique de commande embarquée dans l'appareil mobile peut être minimisée.

Avantageusement et selon l'invention, l'appareil mobile comporte des capteurs adaptés pour détecter la présence d'obstacles dans son environnement proche et des moyens adaptés pour transmettre à la station de base une information relative à la présence d'obstacles. L'appareil mobile comporte en outre des moyens de commande locaux réagissant à la présence d'obstacles pour appliquer une stratégie de sécurité. Des capteurs de proximité tels des capteurs à ultrasons ou bien des capteurs de contact permettent ainsi d'assurer la sécurité au voisinage de l'appareil mobile, celui-ci pouvant détecter un obstacle, par exemple un animal, et mettre en oeuvre localement une stratégie de sécurité comme l'arrêt total et immédiat ou un évitement par modification du déplacement en cours. La présence d'obstacles est transmise à la station de base, simultanément avec les informations GNSS de l'appareil mobile, permettant ainsi à la station de base « d'apprendre » la position des obstacles et de modifier les trajectoires de futurs parcours afin de les éviter.

Avantageusement et selon l'invention, le module de consignes de la station de base est adapté pour mettre à jour la définition topographique du terrain en fonction des obstacles détectés par l'appareil mobile. Des obstacles présentant un certain caractère de permanence peuvent ainsi être enregistrés dans la définition topographique du terrain et pris en compte dans l'élaboration de la stratégie de parcours du terrain appliquée par l'appareil mobile.

Avantageusement et selon l'invention, le dispositif de commande comporte une pluralité d'appareils mobiles et la station de base est adaptée pour calculer la position de chaque appareil mobile et pour coordonner les commandes de déplacement à appliquer par chaque appareil mobile. Ainsi une seule station de base peut commander les déplacements de plusieurs appareils mobiles. On évite ainsi de dupliquer dans chaque appareil mobile des moyens électroniques couteux. En outre, la station de base calculant la position de chaque appareil mobile est à même de coordonner leurs déplacements les uns par rapport aux autres et de permettre l'exécution de la mission pour un coût global optimisé.

Avantageusement et selon l'invention, le module de positionnement de la station de base est adapté pour détecter une dégradation du signal satellite reçu par un récepteur GNSS mobile à partir des informations GNSS brutes transmises par celui-ci et pour transmettre en retour des commandes de réglage dudit récepteur. Ainsi, lorsque les conditions de réception des signaux satellite sont altérées à l'endroit de la position de l'appareil mobile, par exemple par des réflexions entrainant des trajets multiples du signal et donc des discontinuités de la position calculée à partir des informations GNSS brutes de l'appareil mobile, la station de base tire parti de la similitude de son récepteur avec celui de l'appareil mobile pour définir quel est le signal valide et forcer l'accord du récepteur de l'appareil mobile sur celui-ci.

Avantageusement et selon l'invention, le module de positionnement de la station de base est adapté pour calculer une incertitude de localisation affectant la position d'un appareil mobile à partir des informations GNSS brutes transmises par celui-ci et pour modifier la commande de déplacement transmise en fonction de cette incertitude. Ainsi, en fonction du nombre et de la position des satellites reçus par le récepteur de l'appareil mobile, la station de base est en mesure d'estimer une possible erreur de position de celui-ci. Si cette erreur est importante, la commande de déplacement qui sera envoyée à l'appareil mobile en tiendra compte, par exemple en commandant un grand déplacement pour sortir de la zone perturbée si l'appareil mobile est loin d'une limite du terrain ou bien en limitant le déplacement pour éviter tout franchissement de limite.

Avantageusement et selon l'invention, l'appareil mobile du dispositif selon l'invention est une tondeuse à gazon. On obtient ainsi un système autonome de tonte permettant de traiter de grands espaces tels que des golfs. D'autres applications du dispositif de commande selon l'invention peuvent être considérées, par exemple le balayage d'allées dans un parc, la surveillance de dépôts en plein air comme dans les zones portuaires, etc.

L'invention concerne également un dispositif de commande d'appareil(s) mobile(s) autopropulsé(s) caractérisé en combinaison par tout ou partie des caractéristiques mentionnées ci-dessus ou ci-après.

D'autres buts, caractéristiques et avantages de l'invention apparaîtront au vu de la description qui va suivre et des dessins annexés dans lesquels :
- la figure 1 représente une vue schématique d'un terrain équipé d'un dispositif selon l'invention,
- la figure 2 représente une vue schématique de la station de base selon le dispositif de l'invention,
- la figure 3 représente une vue schématique d'un appareil mobile selon le dispositif de l'invention.

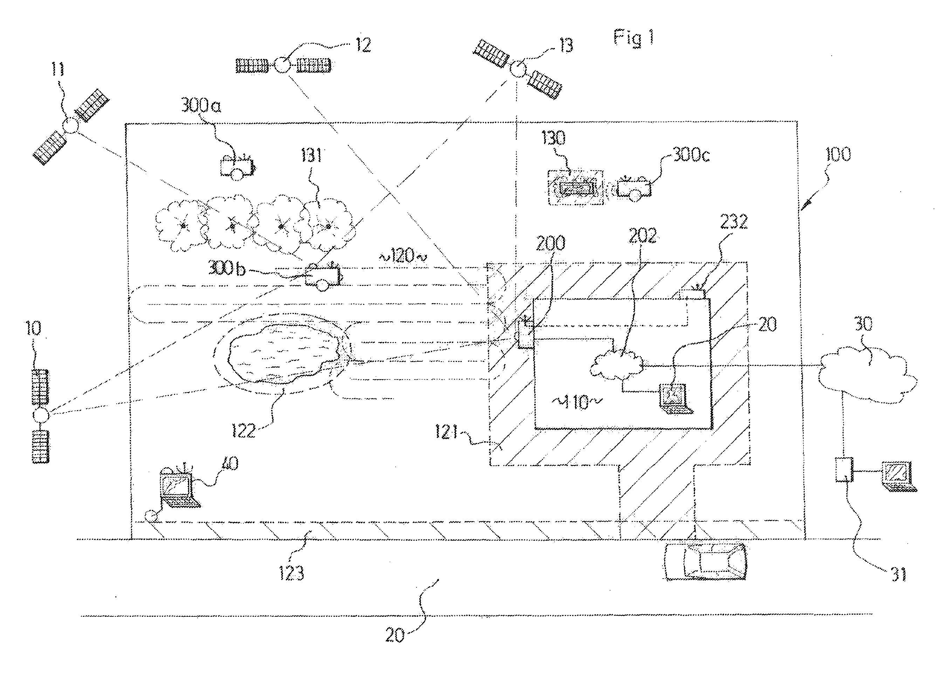

La figure 1 représente une vue schématique d'un terrain 100 sur lequel un dispositif de commande d'appareil(s) mobile(s) autopropulsé(s) selon l'invention a été installé. Dans la description qui va suivre, le dispositif de commande d'appareil(s) mobile(s) sera décrit en se référant à un exemple mettant en oeuvre une (des) tondeuse(s) à gazon 300 à titre d'appareil(s) mobile(s).

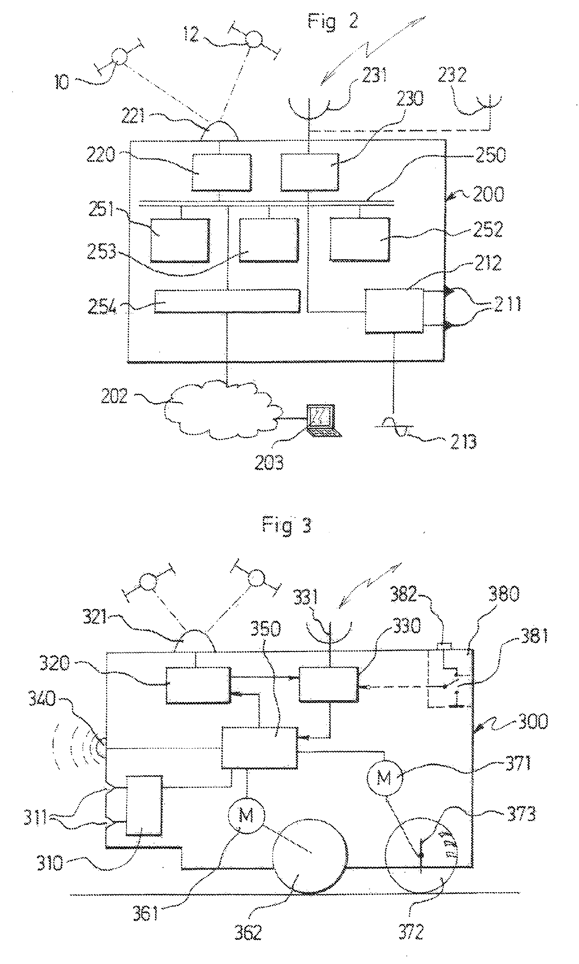

Le dispositif comprend une station de base fixe 200, représentée plus en détail à la figure 2, comportant un récepteur de système de localisation par satellite, dit récepteur GNSS fixe 220, associé à une antenne 221. Le récepteur GNSS fixe 220 est adapté pour recevoir des signaux en provenance d'une constellation de satellites 10, 11, 12, et 13. Le récepteur GNSS fixe 220 extrait, pour chacun des satellites 10, 11, 12, 13 dont les signaux sont correctement reçus et traités, un ensemble de quatre mesures proprement datées de l'instant de mesure (correspondant à un instant de réception des signaux satellites) dans le référentiel temporel du système GNSS utilisé. Ces mesures sont :
- la pseudo distance-code représentative de la distance satellite-récepteur entachée du biais d'horloge du récepteur et mesurée sur les asservissements en code du traitement récepteur
- la pseudo distance-phase représentative de la distance satellite-récepteur entachée du biais d'horloge du récepteur et mesurée sur les asservissements en porteuse du traitement récepteur
- le « Doppler intégré » représentatif de l'incrément de pseudo distance entre deux mesures successives sur les asservissements en porteuse du traitement récepteur
- une mesure du rapport signal à bruit du canal de réception du satellite considéré

Ces informations seront appelées informations GNSS brutes par la suite.

La station de base 200 comprend en outre un émetteur récepteur radiofréquence 230, par exemple un émetteur récepteur adapté pour transmettre et recevoir des données dans la bande de fréquence réservée aux applications industrielles, scientifiques et médicales, tel qu'un émetteur récepteur WIFI ™. Cet émetteur récepteur est associé à une ou plusieurs antennes 231, 232 permettant de couvrir le terrain 100 sans que le signal ne soit masqué par des bâtiments par exemple.

La station de base comporte encore différents modules : un module 251, dit module de positionnement, adapté pour calculer la position de chaque tondeuse 300 sur le terrain en utilisant des informations GNSS brutes en provenance de chaque tondeuse, un module 252, dit module de consignes, adapté pour définir et enregistrer la définition topographique du terrain, des paramètres de la mission à accomplir par chaque tondeuse, ainsi que pour élaborer une stratégie de parcours du terrain par celles-ci, et un module 253, dit module de commande, adapté pour commander le déplacement de chaque tondeuse sur le terrain. Le fonctionnement détaillé de ces modules sera décrit par la suite en relation avec le fonctionnement global du dispositif de commande de l'invention. Bien entendu, ces différents modules qui seront décrits par leur aspect fonctionnel, peuvent être réalisés avec des moyens informatiques tels qu'un microcontrôleur, un bus de commandes et de données associé, des mémoires RAM, ROM, etc. Ces moyens informatiques, connus en eux-mêmes, sont associés avec des programmes informatiques réalisables par l'homme du métier à partir de la description fonctionnelle des différents modules.

La station de base 200 comprend également un serveur informatique 254 et des moyens de connexion 201 à un réseau local 202 permettant ainsi à un terminal 203 relié à ce réseau d'avoir accès aux ressources et informations contenues dans la station. Le réseau local 202 peut également être connecté au réseau Internet 30 de telle sorte qu'un intervenant externe autorisé, par exemple l'installateur du dispositif, puisse accéder au dispositif de commande et en particulier à la station de base 200 à partir d'un poste de travail 31 relié à Internet. De cette façon, il est possible d'effectuer la maintenance du dispositif à distance, que ce soit pour y charger des logiciels mis à jour ou intervenir sur des données descriptives du terrain ou de la mission à exécuter.

La station de base 200 est également reliée à un réseau d'alimentation en énergie électrique 213 par un bloc d'alimentation 212. Le bloc d'alimentation 212 comporte également des moyens de branchement 211 destinés à coopérer avec des moyens de branchement 311 conjugués portés par la tondeuse 300 afin de procéder au rechargement de la source d'énergie embarquée dans la tondeuse.

La station de base 200 est placée sur le terrain 100 dans une position dont les coordonnées géographiques absolues (longitude et latitude) sont connues aussi précisément que possible. On notera néanmoins que cette position peut être estimée par le récepteur GNSS fixe 220 et affinée par un filtrage sur les mesures répétées effectuées. Cette position sert de référence à tous les calculs nécessitant la connaissance des coordonnées géographiques absolues, tels que les calculs d'estimation de distance au satellite, etc.

Cette position est enregistrée dans une mémoire faisant partie du module de consignes 252 dans la station de base 200. Le module de consignes 252 comporte également dans sa mémoire des données représentatives de la définition topographique du terrain 100.

Cette définition topographique peut être très simple et ne comprendre que les coordonnées géographiques des quatre coins d'un terrain rectangulaire, ou être le plus complexe et comprendre de multiples zones comme dans l'exemple représenté figure 1. Par exemple, le terrain 100 comprend une zone principale 120, une allée 121 autour d'un corps de bâtiment 110, une zone approximativement elliptique 122 correspondant à une pièce d'eau par exemple et une zone 123 formant une bande étroite le long de la limite du terrain 100 longeant une route 20. Ces différentes zones sont définies par des données représentant les coordonnées géographiques de leurs limites et enregistrées dans la mémoire du module de consignes 252.

On comprendra naturellement que la référence à des coordonnées géographiques doit s'entendre comme se référant à des coordonnées absolues ou relatives. En effet, comme on le verra par la suite, l'invention fait usage du GNSS différentiel dont la référence est la station de base 200. Ainsi, toute coordonnée géographique portant sur le terrain 100 ou une zone de celui-ci peut être avantageusement exprimée en coordonnées relatives par rapport à la position de la station de base 200.

Chacune de ces zones correspond à un traitement distinct par une tondeuse à gazon 300. Par exemple, la zone 120 doit être tondue de manière normale alors que la zone 121 n'est permise que pour un déplacement de la tondeuse sans action de tonte, la zone 122 correspond à une zone interdite de passage car la tondeuse ne peut traverser une pièce d'eau, la zone 123 ne peut être parcourue que longitudinalement, parallèlement à l'axe de la route 20 qu'elle borde afin d'éviter d'empiéter en dehors des limites du terrain, en particulier sur la route 20. L'ensemble de ces règles de déplacement est enregistré dans la mémoire du module de consignes 252, sous la forme de données constituant au moins pour partie les paramètres de la mission des appareils mobiles.

Le dispositif comporte également des appareils mobiles ou tondeuses à gazon 300a, 300b, 300c parcourant le terrain 100. Chaque tondeuse 300, décrite plus en détail sur la figure 3, comporte un récepteur d'un système de localisation par satellite, dit récepteur GNSS mobile 320, associé à une antenne 321. Le récepteur GNSS mobile 320 est également adapté, de manière analogue au récepteur GNSS fixe 220 de la station de base, pour extraire des informations GNSS brutes des signaux satellite reçus. Le récepteur GNSS mobile 320 est adapté pour transmettre les informations GNSS brutes à un émetteur récepteur radiofréquence 330 qui les transmet à son tour à destination de la station de base 200 au moyen d'une antenne 331. L'émetteur récepteur radiofréquence 330 est par exemple un émetteur récepteur adapté pour transmettre et recevoir des données dans la bande de fréquence réservée aux applications industrielles, scientifiques et médicales, tel qu'un émetteur récepteur WIFI ™.

L'émetteur récepteur radiofréquence 330 est adapté pour pouvoir communiquer avec l'émetteur récepteur 230 de la station de base, et reçoit de celui-ci une commande de déplacement qu'il transmet à un module de commande mobile 350.

La tondeuse 300 comporte également des moyens de déplacement tels qu'une paire de roues motrices 362 latérales indépendantes placées de part et d'autre de son axe de déplacement, et un moteur électrique 361 d'entraînement propre à chacune des roues 362. D'autres roues (non représentées) sont prévues pour assurer l'équilibre de la tondeuse.

La tondeuse 300 comporte en outre au moins un actionneur apte à effectuer différents travaux. En l'occurrence, la tondeuse 300 comporte une lame hélicoïdale 372 de tonte comportant des moyens de réglage 373 de la hauteur de coupe, entraînée par un moteur électrique 371. Les moteurs électriques 361 et 371 ainsi que l'électronique embarquée sont alimentés en énergie par une source d'énergie, en l'occurrence une batterie 310. La tondeuse 300 comporte des moyens de branchement 311 reliés à la batterie 310, coopérant avec des moyens de branchement conjugués 211 portés par la station de base 200 et adaptés pour pouvoir assurer la recharge de la batterie 310.

Le module de commande mobile 350 est adapté pour commander au moins les moteurs 361 d'entraînement des moyens de déplacement, et le cas échéant, le moteur 371 de l'entraînement des moyens de coupe.

La tondeuse 300 comporte également au moins un capteur 340, relié au module de commande mobile 350, adapté pour détecter la présence d'obstacles dans son environnement proche. Le capteur 340 peut être, à titre d'exemple, un capteur de proximité à ultrasons ou à rayonnement infrarouge, ou un capteur de contact, tel qu'un interrupteur relié à une jupe souple autour de la machine...

Le dispositif de commande selon l'invention comporte également un appareil de relevé 40 permettant d'effectuer un relevé de la définition topographique du terrain. Cet appareil de relevé comprend un récepteur GNSS, un émetteur récepteur radiofréquence adapté pour pouvoir communiquer avec la station de base et au moins un interrupteur adapté pour commander l'exécution d'un relevé de la position de l'appareil par la station de base. Le relevé de position s'effectue par exemple au moyen des données GNSS brutes transmises par le récepteur GNSS de l'appareil de relevé 40 via l'émetteur-récepteur radiofréquence à destination du module de positionnement 251 de la station de base 200 pour y être traitées et en les enregistrant dans le module de consignes 252.

L'appareil de relevé est déplacé en limite du terrain ou de zone, et en chaque point, un relevé de la position de l'appareil est effectué par la station de base sur requête de l'appareil de relevé. Le relevé de position peut être également effectué en continu en déplaçant l'appareil de relevé 40 le long des frontières de zone. Les informations GNSS brutes ainsi relevées sont transmises au fur et à mesure de leur obtention vers la station de base 200.

L'appareil de relevé peut être constitué par un ordinateur portable convenablement équipé.

Si un tel appareil de relevé se justifie chez un prestataire devant configurer de nombreux terrains, on peut cependant remarquer qu'une tondeuse 300 comporte également des moyens tels que le récepteur GNSS et l'émetteur récepteur analogues à ceux de l'appareil de relevé 40. De ce fait, une tondeuse 300 peut être avantageusement utilisée en tant qu'appareil de relevé par exemple par le propriétaire pour des modifications mineures de la définition topographique du terrain.

A cette fin, au moins une tondeuse 300 comprend également un module optionnel dit module de relevé 380. Ce module comporte des moyens propres à commander un fonctionnement de la tondeuse en tant qu'appareil de relevé topographique permettant d'effectuer la définition topographique du terrain. Par exemple, le module de relevé 380 comprend un interrupteur 381 propre à informer la station de base 200 du fonctionnement de la tondeuse 300 en mode de relevé, et un bouton poussoir 382 qui, lorsqu'il est actionné, commande l'exécution par la station de base 200 d'un relevé de la position de la tondeuse. Lorsque la tondeuse 300 fonctionne en tant qu'appareil de relevé, elle est manuellement déplacée sur les limites du terrain 100 et/ou des différentes zones, et une série de relevés de position est effectuée. Ces relevés sont stockés dans le module de consignes 252 de la station de base pour vérification, édition et traitement à partir d'un terminal 203 relié au réseau local 202 ou d'un poste de travail distant 31:

La définition topographique du terrain peut bien entendu être effectuée par d'autres moyens, par exemple en utilisant un relevé cadastral ou des photographies aériennes, pour autant que ceux-ci comportent un référencement par rapport aux coordonnées géographiques (longitude et latitude) ou que l'on puisse en extraire des coordonnées relatives à la position de la station de base, et en reportant les coordonnées des limites de zone dans une liste de données représentatives de la définition topographique du terrain.

La définition topographique du terrain est enregistrée dans des moyens de mémoire faisant partie du module de consignes 252. Chaque zone de la définition topographique du terrain est assortie de paramètres de mission décrivant entre autres le type de déplacement qui peut être effectué par la tondeuse 300 sur la zone considérée. À partir de ces données, le module de consignes 252 élabore une stratégie de parcours du terrain prenant en compte un certain nombre de paramètres d'optimisation du déplacement de la ou des tondeuses, comme par exemple la largeur de coupe que peut effectuer la tondeuse, l'autonomie de sa batterie, etc.

A titre d'exemple, on a représenté sur la figure 1, en tirets fins, une stratégie de parcours élémentaire appliquée à la tondeuse 300b, consistant en un balayage de la zone 120 parallèlement au grand axe du terrain 100, de pas de balayage égal à la largeur de coupe, et bornée par les limites de zones 121 et 122 rencontrées sur ce parcours.

Avantageusement, comme la station de base 200 comporte des moyens de branchement 211 permettant la recharge de la batterie 310 de la tondeuse, le module de consignes 252 élabore une stratégie de parcours propre à amener la tondeuse 300 à proximité de la station de base lorsque la charge de la batterie atteint un seuil minimum. Ceci permet de minimiser les déplacements "non productifs" de la tondeuse 300. En outre, dans le cas d'un dispositif comportant plusieurs tondeuses, le module de consignes est adapté pour élaborer une stratégie de parcours visant à amener à tour de rôle les tondeuses en position de recharge.

Bien entendu, une telle stratégie trouverait à s'appliquer même si l'emplacement de recharge de la batterie était dissocié de la station de base. En effet, il est tout à fait possible de concevoir une station de recharge des tondeuses 300 séparée de la station de base et placée dans un emplacement différent, tel qu'un hangar de rangement, etc. Dans ce cas, la position de la station de recharge sera mémorisée dans le module de consigne et celui-ci établira des stratégies de parcours visant à faire passer en temps utile la tondeuse 300 à proximité de la station de recharge.

En fonctionnement, le récepteur GNSS mobile 320 de chaque tondeuse 300 reçoit un signal de la part de satellites 10, 11, 12, 13 et retransmet les informations GNSS brutes qu'il en extrait à un module de positionnement 251 de la station de base 200. Cette transmission s'effectue par l'envoi d'un message numérique, dit message de position, par l'émetteur récepteur radiofréquence 330 à destination de l'émetteur récepteur radiofréquence 230 de la base. Ce message comporte des données numériques représentatives de l'identité de la tondeuse 300 (lorsqu'une même station de base 200 est associée à une pluralité d'appareils mobiles comme les tondeuses 300a, 300b et 300c) et de l'identité de chaque satellite dont le signal est reçu, suivie du contenu et des caractéristiques issues de la démodulation de ce signal par le récepteur GNSS mobile 320.

Le message de position transmis par la tondeuse 300 peut en outre, le cas échéant, comprendre d'autres champs de données représentatives d'informations d'état de la tondeuse considérée, tels qu'une information de charge restante dans la batterie 310 ou encore la mesure et/ou l'état du capteur 340.

Le module de positionnement 251 effectue des calculs de position de la tondeuse 300 sur le terrain à partir des informations GNSS brutes de la tondeuse, des informations GNSS brutes reçus par le récepteur GNSS fixe 220 de la station de base, et de la position connue de celle-ci.

La méthode de calcul de la position employée est par exemple celle du GNSS différentiel, dans laquelle les informations GNSS brutes de l'appareil mobile 300 sont corrigées de leurs erreurs estimées au moyen des informations GNSS brutes du récepteur GNSS fixe 220. Les mesures corrigées sont alors utilisées pour l'estimation de position de l'appareil mobile 300. De manière préférentielle, la position de la tondeuse sera calculée au moyen d'une technique dérivée de la technique dite GPS-RTK dans laquelle la précision du positionnement est améliorée et peut avoisiner le centimètre. Cette technique emploie directement la mesure du déphasage de la fréquence porteuse des signaux satellites entre le récepteur GNSS mobile 320 de la tondeuse 300 et le récepteur GNSS fixe 220 de la station de base 200. Après lever d'ambigüité (c'est-à-dire détermination du nombre de périodes entières de porteuse qui sépare les mesures des deux récepteurs, canal satellite par canal satellite) effectué selon des méthodes connues de l'homme du métier, dans un contexte où la distance entre la base fixe et la tondeuse est courte, on atteint une évaluation précise dans les 3 dimensions des coordonnées du mobile dans un repère dont la base fixe est l'origine.

Le module de positionnement 251 de la station de base est également adapté pour détecter une dégradation du signal satellite reçu par un récepteur GNSS mobile 320. En effet, dans le cas de signaux satellite affectés par de multiples trajets, une instabilité de la mesure de position peut être constatée. Dans ce cas, le module de positionnement 251 est adapté pour comparer les informations GNSS brutes reçues par la tondeuse, avec les informations reçues par le récepteur GNSS fixe de la station de base. Le module de positionnement 251 peut en déduire un nouveau réglage à adopter par le récepteur GNSS mobile de la tondeuse, afin d'éliminer les signaux parasites. Le module de positionnement 251 est également adapté pour fournir au récepteur GNSS mobile des paramètres GNSS qui améliorent les temps d'acquisition et/ou de ré-acquisition des signaux, par exemple des éphémérides, y compris en prenant en compte la dynamique et les caractéristiques de réception propre au récepteur GNSS mobile.

Le module de positionnement 251 est également adapté pour estimer une incertitude de localisation affectant la position d'un appareil mobile qu'il vient de calculer. En effet, en se déplaçant sur le terrain 100, la ou les tondeuses 300 peuvent se trouver dans des endroits du terrain où certains satellites sont susceptibles d'être masqués par des arbres ou des bâtiments. De même, en fonction des orbites des satellites, certains d'entre eux peuvent disparaitre de la vue directe du récepteur GNSS fixe de la station de base. Si le module de positionnement n'a pu utiliser des informations GNSS brutes d'un nombre suffisant de satellites, la position estimée peut être entachée d'une erreur. Cette erreur peut être assimilée à un rayon d'un cercle ou plus exactement aux dimensions dans les trois axes d'un ellipsoïde dans lequel se trouve la tondeuse 300. La valeur de ce rayon ou de ces trois dimensions est également transmise au module de commande 253.

Une fois la position de la tondeuse 300 déterminée, celle-ci est transmise au module de commande 253. Le module de commande détermine une commande de déplacement à partir de cette position instantanée de la tondeuse et de la stratégie de parcours établie par le module de consignes 252. La commande de déplacement peut-être par exemple déterminée par un cap à suivre et une durée de déplacement à exécuter par la tondeuse 300, ou encore par un nombre de tours de roues déterminé pour chacune des roues.

Préférentiellement, la commande de déplacement est transmise via les émetteurs récepteurs radiofréquence 230 et 330, au module de commande 350 de la tondeuse 300 sous la forme d'une commande de puissance des moteurs 361 des roues 362 de la tondeuse 300. Par exemple, le module de commande 253 envoie un message numérique, dit message de commande, à destination du module de commande mobile 350, ce message numérique comportant, dans le cas d'un dispositif comportant plusieurs appareils mobiles, l'identification de la tondeuse concernée, une valeur de la puissance à appliquer par un premier moteur de roue 361, par exemple sous la forme d'un pourcentage de la puissance maximum du moteur 361, une valeur de la puissance à appliquer par le second moteur. Sous cette forme, les roues sont entraînées à puissance constante par leur moteur respectif. Si ces moteurs sont réglés à la même puissance, le déplacement s'effectue en ligne droite, dans le cas contraire, la tondeuse opère une rotation du côté de la roue entraînée à la plus faible puissance. Cette commande est maintenue jusqu'à la prochaine mesure de position de la tondeuse.

Le message de commande peut comprendre, le cas échéant, des commandes à appliquer aux actionneurs de la lame de tonte. Par exemple, en cas de déplacement sur une zone telle que l'allée 121 où les paramètres de mission imposent un déplacement sans action de tonte, le message de commande comprendra un indicateur sous la forme d'une valeur numérique prédéfinie dans un champ du message, indiquant au module de commande mobile 350 d'arrêter le moteur 371 de la lame de tonte et de commander le réglage de hauteur de la lame à sa position la plus haute.

La commande de déplacement est également modifiée en fonction de la qualité des signaux reçus et du nombre de satellites pris en compte par le module de positionnement 251. Comme on l'a vu précédemment, celui-ci transmet au module de commande une incertitude de localisation affectant la position de la tondeuse 300. Le module de commande 253 prend alors en compte cette incertitude pour déterminer la commande à transmettre au module de commande mobile 350. Par exemple, si la projection horizontale de l'ellipsoïde sur l'axe longitudinal du mobile est faible, la position est de bonne qualité et le module 253 pourra commander un déplacement rapide selon cet axe. Dans un autre exemple, si la projection sur un axe transversal est bien meilleure, le module 253 pourra commander un déplacement en rotation pour orienter le déplacement selon cet axe. Dans tous les cas et pour assurer la sécurité de la mission, si les dimensions de l'ellipsoïde dépassent un seuil prédéterminé ou en fonction de la position relative du mobile dans les limites du terrain comme dans la zone 123 en bordure de la route 20, le module de commande 253 ralentira ou arrêtera l'appareil mobile afin d'éviter une excursion intempestive de la tondeuse sur la route. Dans le cas d'un arrêt, le calcul de la position du mobile et de son ellipsoïde d'incertitude sont réalisés régulièrement et surveillés pour relancer le mobile automatiquement dès lors que la géométrie et/ou la qualité de réception des satellites se sont naturellement améliorées conduisant à des incertitudes plus adaptées au mouvement. Au contraire, si la tondeuse est éloignée de toute zone présentant un danger ou requérant une attention particulière, le module de commande 253 pourra commander un déplacement rapide pour permettre à la tondeuse 300 de se dégager de l'endroit où la réception des signaux satellites est perturbée, ou bien encore ne pas « sur corriger » des dérives apparentes de position qui pourraient n'être dues qu'à cette incertitude.

Les commandes de déplacement déterminées dans la station de base fixe 200 par le module de commande 253 sont transmises au module de commande mobile 350 de la tondeuse 300 qui les applique selon deux modes possibles.

Dans un premier mode d'exécution de la commande de déplacement, applicable en particulier au cas où la commande comporte une durée d'exécution ou une distance à parcourir, la tondeuse 300 exécute la commande et à l'issue du déplacement (ou juste avant la fin pour assurer une continuité du mouvement) elle transmet à la station de base un message comportant les informations GNSS brutes relevées dans sa nouvelle position. En variante, et particulièrement lorsque la commande de déplacement couvre une longue distance (lorsque par exemple la tondeuse est éloignée de toute limite de zone), la tondeuse peut être adaptée pour transmettre périodiquement un message de position. Ce mode d'exécution présente l'avantage que si la liaison radiofréquence entre la station de base et la tondeuse est perdue, cette dernière s'arrêtera à la fin du déplacement commandé.

Dans un second mode d'exécution de la commande de déplacement, applicable par exemple dans le cas où la commande déterminée est une commande en puissance des moteurs des roues, la commande est exécutée tant que le module de commande mobile 350 ne reçoit pas de modification de commande. Dans ce cas, il est préférable que la tondeuse soit adaptée pour transmettre en permanence des messages de position et qu'une procédure du type « chien de garde » soit installée, définissant une durée maximale pendant laquelle la tondeuse peut se déplacer sans recevoir d'informations de la station de base.

Quel que soit le mode d'exécution des commandes de déplacement, il convient de prévoir des moyens de sécurité mis en oeuvre directement sur la tondeuse en cas de rencontre inopinée avec un obstacle.

La tondeuse 300 comporte donc à cet effet au moins un capteur 340 par exemple du type capteur de proximité à ultrasons permettant de détecter un obstacle à une distance de 10 cm à 1 m. Préférentiellement, la tondeuse est équipée d'une pluralité de capteurs répartis sur tout son périmètre afin de détecter d'éventuels obstacles dans toutes les directions. Ces capteurs sont reliés au module de commande mobile 350 qui est adapté d'une part pour transmettre une information relative à la présence d'obstacles dans le message de position émis par la tondeuse à destination de la station de base, et d'autre part pour commander une réaction immédiate des moyens de déplacements et des actionneurs de la tondeuse selon une stratégie de sécurité implantée localement.

Deux sortes d'obstacles peuvent être considérés : des obstacles dits fugitifs, tels que des personnes ou des animaux susceptibles de croiser le chemin de la tondeuse et qui disparaitront de son environnement proche en quelques secondes voire quelques minutes, et des obstacles présentant un certain caractère de permanence (de quelques jours à quelques semaines et plus) comme une jardinière 130 installée sur le terrain pour la saison estivale ou un bouquet d'arbres 131 dont la définition topographique à titre de zone particulière n'a pas été faite initialement.

Un exemple de stratégie de sécurité implantée localement dans le module de commande mobile 350 de la tondeuse consiste dans un premier temps à commander un arrêt immédiat du déplacement et des actionneurs et à vérifier la permanence de la présence de l'obstacle. Si celui-ci disparait dans un bref intervalle (quelques secondes à quelques minutes), il est considéré comme obstacle fugitif et signalé comme tel à la station de base. Si l'obstacle est toujours présent à l'expiration du bref intervalle, ce fait est signalé à la station de base 200 dans un message de position permettant, après traitement par le module de positionnement 251, d'une part d'enregistrer cette position et l'information de présence d'obstacle dans le module de consignes 252 et d'autre part de calculer une modification de la stratégie de parcours de la tondeuse considérée en lui faisant effectuer un changement de direction, à angle droit ou demi-tour par un message de commande approprié du module de commande 253.

L'espace occupé par l'obstacle n'ayant pas été traité (tondu), le module de consigne adaptera sa stratégie de parcours pour y ramener la tondeuse. Si l'obstacle présente un caractère de permanence, le même processus recommencera, et un autre point du périmètre de l'obstacle sera enregistré dans le module de consignes 252. Dès lors qu'un nombre suffisant de points du périmètre de l'obstacle sera enregistré dans le module de consignes 252, celui-ci peut mettre à jour sa définition topographique du terrain en créant une zone supplémentaire, affectée d'une interdiction de passage (paramètre de mission associé) autour de la position de l'obstacle. Cette nouvelle zone pourra être validée ou non par une intervention humaine lors d'une prochaine intervention de maintenance.

En résumé, le fonctionnement du dispositif de commande d'appareil(s) mobile(s) autopropulsé(s) selon l'invention peut être décrit comme un procédé de commande d'au moins un appareil mobile autopropulsé adapté pour parcourir un terrain et effectuer un travail prédéterminé sur celui-ci, ledit appareil mobile étant équipé d'un récepteur de système de localisation par satellite, dit récepteur GNSS mobile, et d'un émetteur récepteur radiofréquence, à partir d'une station de base fixe elle-même équipée d'un récepteur de système de localisation par satellite, dit récepteur GNSS fixe, et d'un émetteur récepteur radiofréquence adapté pour communiquer avec celui de l'appareil mobile, ledit procédé comportant les étapes suivantes :
a) établissement d'une définition topographique d'un terrain à traiter par l'appareil mobile, comportant au moins une position de référence affectée à la station de base,
b) élaboration d'une stratégie de parcours dudit terrain par chaque appareil mobile en vue de l'accomplissement d'une mission prédéterminée,
c) détermination de la position de l'appareil mobile sur le terrain à partir de données de localisation par satellite,
d) élaboration et exécution d'une commande de déplacement de l'appareil mobile.

Ce procédé de commande se distingue en ce que la détermination de la position de l'appareil mobile est effectuée par la station de base à partir d'informations GNSS brutes reçues par le récepteur GNSS mobile de l'appareil mobile et retransmises par celui-ci à la station de base, d'informations GNSS brutes reçues dans un même intervalle de temps par le récepteur GNSS fixe attaché à la station de base et de la position de référence de celle-ci.

Alternativement, ou en combinaison avec la caractéristique ci-dessus, l'étape d) d'élaboration et d'exécution d'une commande de déplacement de l'appareil mobile se distingue par l'élaboration de la commande de déplacement dans un module de commande formant partie de la station de base fixe, sa transmission sous forme d'un message numérique de commande par voie hertzienne à un module de commande mobile embarqué dans l'appareil mobile et son exécution par ledit module de commande mobile embarqué.

La description qui précède ainsi que les références aux figures du dessin annexé sont données à titre d'exemple illustratif uniquement et l'homme du métier pourra y apporter de nombreuses modifications sans sortir de la portée de l'invention, comme par exemple équiper les appareils mobiles de moteurs à combustion interne et/ou de moyens de contrôle de la direction du déplacement tels que des roues directrices distinctes ou non des roues motrices.

De même, le dispositif de commande n'est pas limité aux tondeuses à gazon, mais peut être appliqué à toutes sortes d'appareils mobiles autopropulsés tels que machines de balayage, robots de surveillance ou chariots de manutention et/ou de transport dans des entrepôts en plein air, dans des zones portuaires, etc.

## Revendications

1. Dispositif de commande d'appareil(s) mobile(s) autopropulsé(s) (300), comportant :
• une station de base fixe (200), équipée d'un récepteur de système de localisation par satellites, dit récepteur GNSS fixe (220), et d'un émetteur-récepteur radiofréquence (230) adapté pour pouvoir communiquer avec au moins un appareil mobile,
• au moins un appareil mobile (300), comprenant une source d'énergie (310), des moyens de déplacement (362), un récepteur de système de localisation par satellites, dit récepteur GNSS mobile (320), et un émetteur-récepteur radiofréquence (330) adapté pour communiquer avec ladite station de base,
• des moyens de mémoire contenant des données représentatives de la définition topographique d'un terrain (100) parcouru par chaque appareil mobile et de la position de la station de base sur ou au voisinage dudit terrain, **caractérisé en ce que** :
• chaque appareil mobile (300) est adapté pour transmettre à la station de base (200) des informations, dites informations GNSS brutes, représentatives du contenu et des caractéristiques des signaux des satellites reçus par son récepteur GNSS mobile et recevoir une commande de déplacement ;
• la station de base (200) comprend :
- un module, dit module de consignes (252), comprenant lesdits moyens de mémoire et adapté pour élaborer une stratégie de parcours du terrain par ledit ou lesdits appareils mobiles (300) en fonction de la définition topographique du terrain et de paramètres de mission à accomplir par l'appareil mobile,
- un module, dit module de positionnement (251), adapté pour calculer une position instantanée dudit appareil mobile à partir des informations GNSS brutes transmises par l'appareil mobile, des informations représentatives du contenu et des caractéristiques des signaux des satellites reçus par le récepteur GNSS fixe et de la position de la station de base, et
- un module, dit module de commande (253), adapté pour déterminer une commande de déplacement de l'appareil mobile en fonction au moins de la position instantanée de celui-ci et de la stratégie de parcours élaborée par le module de consignes, et pour transmettre ladite commande de déplacement audit appareil mobile.

2. Dispositif de commande selon la revendication 1, **caractérisé en ce qu'**il comprend en outre un appareil de relevé (40) de la définition topographique du terrain, comportant un récepteur GNSS, un émetteur-récepteur adapté pour pouvoir communiquer avec la station de base (200) et au moins un interrupteur adapté pour commander l'exécution d'un relevé de la position de l'appareil de relevé par la station de base.

3. Dispositif de commande selon la revendication 2, **caractérisé en ce que** au moins un appareil mobile (300) comporte des moyens (380, 381, 382) propres à commander un fonctionnement dudit appareil mobile en tant qu'appareil de relevé, à en informer la station de base et à commander l'exécution d'un relevé de sa position par la station de base (200).

4. Dispositif de commande selon l'une des revendications 1 à 3, **caractérisé en ce que** la définition topographique du terrain comprend plusieurs zones (120, 121, 122, 123) distinctes et **en ce que** le module de commande (253) est adapté pour prendre en compte des règles de déplacement définies dans les paramètres de mission pour chacune des zones.

5. Dispositif de commande selon l'une des revendications 1 à 4, **caractérisé en ce que** chaque appareil mobile (300) comporte au moins un actionneur (371, 372, 373) apte à effectuer différents travaux et **en ce que** le module de commande (253) transmet à l'appareil mobile un indicateur du travail à effectuer avec la commande de déplacement.

6. Dispositif de commande selon l'une des revendications 1 à 5, **caractérisé en ce que** la station de base (200) comprend des moyens de connexion (201) à un réseau informatique (202, 30) et un serveur (254) programmé pour permettre, localement ou à distance l'établissement et la mise à jour de la définition topographique du terrain ou des paramètres de mission ainsi que la maintenance du dispositif.

7. Dispositif de commande selon l'une des revendications 1 à 6, **caractérisé en ce que** la station de base comprend en outre des moyens de branchement (211) coopérant avec des moyens de branchement (311) conjugués portés par chaque appareil mobile (300) adaptés pour pouvoir assurer la recharge de la source d'énergie (310) de l'appareil mobile, et **en ce que** la stratégie de parcours élaborée par le module de consignes (252) tient compte d'un état de ladite source d'énergie pour optimiser les déplacements de l'appareil mobile.

8. Dispositif de commande selon l'une des revendications 1 à 7, **caractérisé en ce que** les moyens de déplacement de l'appareil mobile comprennent deux roues motrices latérales (362) indépendantes placées de part et d'autre d'un axe de déplacement de l'appareil mobile, entraînées chacune par un moteur électrique (361) et **en ce que** la commande de déplacement émise par la station de base comprend une commande de puissance appliquée à chaque moteur.

9. Dispositif de commande selon l'une des revendications 1 à 8, **caractérisé en ce que** l'appareil mobile (300) comporte des capteurs (340) adaptés pour détecter la présence d'obstacles (130, 131) dans son environnement proche et des moyens (330) adaptés pour transmettre à la station de base (200) une information relative à la présence d'obstacles.

10. Dispositif de commande selon la revendication 9, **caractérisé en ce que** l'appareil mobile (300) comporte en outre des moyens de commande locaux (350) réagissant à la présence d'obstacles pour appliquer une stratégie de sécurité.

11. Dispositif de commande selon la revendication 9, **caractérisé en ce que** le module de consignes (252) de la station de base (200) est adapté pour mettre à jour la définition topographique du terrain en fonction des obstacles détectés par l'appareil mobile.

12. Dispositif de commande selon l'une des revendications 1 à 11, **caractérisé en ce qu'**il comporte une pluralité d'appareils mobiles (300a, 300b, 300c) et **en ce que** la station de base (200) est adaptée pour calculer la position de chaque appareil mobile et pour coordonner les commandes de déplacement à appliquer par chaque appareil mobile.

13. Dispositif de commande selon l'une des revendications 1 à 12, **caractérisé en ce que** le module de positionnement (251) de la station de base (200) est adapté pour détecter une dégradation du signal satellite reçu par un récepteur GNSS mobile (320) à partir des informations GNSS brutes transmises par celui-ci et pour transmettre en retour des commandes de réglage dudit récepteur.

14. Dispositif de commande selon la revendication 1, **caractérisé en ce que** le module de positionnement (251) de la station de base (200) est adapté pour calculer une incertitude de localisation affectant la position d'un appareil mobile (300) à partir des informations GNSS brutes transmises par celui-ci et pour modifier la commande de déplacement transmise en fonction de cette incertitude.

15. Dispositif de commande selon la revendication 1, **caractérisé en ce que** l'appareil mobile est une tondeuse à gazon.

## Patentansprüche

1. Vorrichtung zum Steuern von selbstangetriebenen Mobilvorrichtung(en) (300), umfassend
- eine feste Basisstation (200), ausgestattet mit einem Empfänger des Systems zur Satellitenlokalisierung, genannt festes GNSS (220) und einem Funksendeempfänger (230), der ausgelegt ist, um mit mindestens einer Mobilvorrichtung zu kommunizieren,
- mindestens eine Mobilvorrichtung (300), umfassend eine Energiequelle (310), Mittel zur Deplatzierung (362), einen Empfänger des Systems zur Satellitenlokalisierung genannt mobiles GNSS (320), und einen Funksendeempfänger (330), der ausgelegt ist, um mit der Basisstation zu kommunizieren,
- Speichermittel, enthaltend Daten, die die topographische Definition eines Geländes (100) darstellen, das von jeder Mobilvorrichtung durchlaufen wird, und die Position der Basisstation auf dem oder in der Nähe des Geländes, **dadurch gekennzeichnet, dass**
- jede Mobilvorrichtung (300) ausgelegt ist, um an die Basisstation (200) Informationen zu übertragen, genannt rohe GNSS-Informationen, die den Inhalt und die Eigenschaften der Signale der Satelliten darstellen, empfangen von seinem mobilen GNSS-Empfänger, und um eine Deplatzierungssteuerung zu empfangen;
- wobei die Basisstation (200) Folgendes umfasst:
- ein Modul, genannt Vorgabewert-Modul (252), umfassend die Speichermittel und ausgelegt, um eine Strategie des Durchlaufens des Geländes durch die Mobilvorrichtung(en) (300) zu erstellen, je nach der topographischen Definition des Geländes und Parametern der von der Mobilvorrichtung durchzuführenden Aufgabe.
- ein Modul, genannt Positionsmodul (251), das ausgelegt ist, um eine augenblickliche Position der Mobilvorrichtung auf der Grundlage der rohen GNSS-Informationen zu berechnen, die von der Mobilvorrichtung übertragen werden, der Informationen, die den Inhalt und die Eigenschaften der Signale der Satelliten darstellen, empfangen vom mobilen GNSS-Empfänger, und der Position der Basisstation, und
- ein Modul, genannt Steuermodul (253), das ausgelegt ist, um eine Steuerung der Deplatzierung der Mobilvorrichtung zu bestimmen, je nach mindestens der augenblicklichen Position dieser und der Strategie des Durchlaufens, die vom Vorgabewert-Modul erstellt wurde, und um die Steuerung der Deplatzierung an die Mobilvorrichtung zu übertragen.

2. Steuervorrichtung nach Anspruch 1, **dadurch gekennzeichnet, dass** sie außerdem eine Vorrichtung zur Vermessung (40) der topographischen Definition des Geländes umfasst, umfassend einen GNSS-Empfänger, einen Sendeempfänger, der ausgelegt ist, um mit der Basisstation (200) kommunizieren zu können, und mindestens einen Schalter, der ausgelegt ist, um die Durchführung einer Vermessung der Position der der Vermessungsvorrichtung durch die Basisstation zu steuern.

3. Steuervorrichtung nach Anspruch 2, **dadurch gekennzeichnet, dass** mindestens eine Mobilvorrichtung (300) Mittel (380, 381, 382) umfasst, die geeignet sind, um einen Betrieb der Mobilvorrichtung als Vermessungsvorrichtung zu steuern, um die Basisstation zu informieren und um die Durchführung einer Vermessung ihrer Position durch die Basisstation (200) zu steuern.

4. Steuervorrichtung nach einem der Ansprüche 1 bis 3, **dadurch gekennzeichnet, dass** die topographische Definition des Geländes mehrere verschiedene Bereiche (120, 121, 122, 123) umfasst, und dadurch, dass das Steuermodul (253) ausgelegt ist, um Regelungen der Deplatzierung zu berücksichtigen, die in den Parametern der Aufgabe für jeden der Bereiche definiert sind.

5. Steuervorrichtung nach einem der Ansprüche 1 bis 4, **dadurch gekennzeichnet, dass** jede Mobilvorrichtung (300) mindestens einen Aktuator (371, 372, 373) umfasst, der dazu in der Lage ist, verschiedene Arbeiten durchzuführen, und dadurch, dass das Steuermodul (253) an die Mobilvorrichtung eine Anzeige der Arbeit überträgt, die mit der Steuerung der Deplatzierung durchgeführt werden muss.

6. Steuervorrichtung nach einem der Ansprüche 1 bis 5, **dadurch gekennzeichnet, dass** die Basisstation (200) Mittel zur Verbindung (201) an ein Computernetzwerk (202, 30) umfasst, und einen Server (254), der programmiert ist, um, lokal oder entfernt, den Aufbau und die Durchführung der topographischen Definition des Geländes oder der Parameter der Aufgabe, ebenso wie die Aufrechterhaltung der Vorrichtung, zu ermöglichen.

7. Steuervorrichtung nach einem der Ansprüche 1 bis 6, **dadurch gekennzeichnet, dass** die Basisstation außerdem Anschlussmittel (211) umfasst, die mit zugeordneten Anschlussmitteln (311) zusammenarbeiten, die von jeder Mobilvorrichtung (300) getragen werden, ausgelegt, um die Wiederaufladung der Energiequelle (310) der Mobilvorrichtung sicherzustellen, und dadurch, dass die Strategie des Durchlaufens, die vom Vorgabewert-Modul (252) erstellt wurde, einen Zustand der Energiequelle berücksichtigt, um die Deplatzierungen der Mobilvorrichtung zu optimieren.

8. Steuervorrichtung nach einem der Ansprüche 1 bis 7, **dadurch gekennzeichnet, dass** die Mittel zur Deplatzierung der Mobilvorrichtung zwei voneinander unabhängige seitliche Antriebsräder (362) umfassen, die auf beiden Seiten einer Deplatzierungsachse der Mobilvorrichtung angebracht sind, jeweils angetrieben durch einen elektrischen Motor (361), und dadurch, dass die Deplatzierungssteuerung, ausgegeben durch die Basisstation, eine Steuerung der Leistung umfasst, die auf jeden Motor angewendet wird.

9. Steuervorrichtung nach einem der Ansprüche 1 bis 8, **dadurch gekennzeichnet, dass** die Mobilvorrichtung (300) Sensoren (340) umfasst, die ausgelegt sind, um die Anwesenheit von Hindernissen (130, 131) in ihrer nahen Umgebung nachzuweisen, und Mittel (330), die ausgelegt sind, um an die Basisstation (200)eine Information mit Bezug auf die Anwesenheit von Hindernissen zu übertragen.

10. Steuervorrichtung nach Anspruch 9, **dadurch gekennzeichnet, dass** die Mobilvorrichtung (300) außerdem lokale Steuermittel (350) umfasst, die auf die Anwesenheit von Hindernissen reagieren, um eine Sicherheitsstrategie anzuwenden.

11. Steuervorrichtung nach Anspruch 9, **dadurch gekennzeichnet, dass** das Vorgabewert-Modul (252) der Basisstation (200) ausgelegt ist, um die topographische Definition des Geländes je nach den Hindernissen zu aktualisieren, die von der Mobilvorrichtung nachgewiesen werden.

12. Steuervorrichtung nach einem der Ansprüche 1 bis 11, **dadurch gekennzeichnet, dass** sie eine Vielzahl von Mobilvorrichtungen (300a, 300b, 300c) umfasst, und dadurch, dass die Basisstation (200) ausgelegt ist, um die Position jeder Mobilvorrichtung zu berechnen, und um die Deplatzierungssteuerungen, die von jeder Mobilvorrichtung angewendet werden müssen, zu koordinieren.

13. Steuervorrichtung nach einem der Ansprüche 1 bis 12, **dadurch gekennzeichnet, dass** das Positionierungsmodul (251) der Basisstation (200) ausgelegt ist, um eine Verschlechterung des Satellitensignals nachzuweisen, das von einem mobilen GNNS-Empfänger (320) auf der Grundlage der rohen GNNS-Informationen erhalten wird, die von diesem übertragen werden, und um Steuerungen zur Regelung des Empfängers zurück zu übertragen.

14. Steuervorrichtung nach Anspruch 1, **dadurch gekennzeichnet, dass** das Positionierungsmodul (251) der Basisstation (200) ausgelegt ist, um eine Unbestimmtheit der Lokalisierung, die die Position einer Mobilvorrichtung (300) betrifft, auf der Grundlage der rohen GNSS-Informationen zu berechnen, die von dieser übertragen werden, und um die Deplatzierungssteuerung zu ändern, die je nach dieser Unbestimmtheit übertragen wird.

15. Steuervorrichtung nach Anspruch 1, **dadurch gekennzeichnet, dass** die Mobilvorrichtung ein Rasenmäher ist.

## Claims

1. Control device for one or more self-propelled mobile apparatus (300), including:
• a fixed base station (200) equipped with a receiver of a satellite positioning system, called a fixed GNSS receiver (220), and with a radio-frequency transceiver (230) suitable to communicate with at least one mobile apparatus,
• at least one mobile apparatus (300), including a power source (310), displacement means (362), a receiver of a satellite positioning system, called a mobile GNSS receiver (320), and a radio-frequency transceiver (330) suitable to communicate with said base station,
• memory means containing data representative of the topographical definition of a terrain (100) travelled over by each mobile apparatus and of the position of the base station in, or in the vicinity of, said terrain, **characterised in that**:
• each mobile apparatus (300) is suitable to transmit information, called raw GNSS information, to the base station (200) that is representative of the contents and of the characteristics of the satellite signals received by its mobile GNSS receiver, and to receive a displacement command;
• the base station (200) includes:
- a module, called a set-point module (252), including said memory means and suitable to work out a strategy for travelling over the terrain by said one or more mobile apparatus (300) as a function of the topographical definition of the terrain and as a function of parameters of a task to be accomplished by the mobile apparatus,
- a module, called a positioning module (251), that is suitable to calculate an instantaneous position of said mobile apparatus from the raw GNSS information transmitted by the mobile apparatus, from the information that is representative of the contents and of the characteristics of the satellite signals received by the fixed GNSS receiver, and from the position of the base station, and
- a module, called a control module (253), suitable to determine a command for displacement of the mobile apparatus as a function of at least the instantaneous position of said apparatus and as a function of the travelling strategy worked out by the set-point module, and to transmit said displacement command to said mobile apparatus.

2. Control device according to Claim 1, **characterised in that** it includes, in addition, an apparatus for logging (40) the topographical definition of the terrain, including a GNSS receiver, a transceiver suitable to communicate with the base station (200), and at least one switch suitable to control the execution of a logging of the position of the logging apparatus by the base station.

3. Control device according to Claim 2, **characterised in that** at least one mobile apparatus (300) includes means (380, 381, 382) that are appropriate to control an operation of said mobile apparatus as a logging apparatus, to inform the base station thereof, and to control the execution of a logging of its position by the base station.

4. Control device according to one of Claims 1 to 3, **characterised in that** the topographical definition of the terrain includes several distinct zones (120, 121, 122, 123), and **characterised in that** the control module (253) is suitable to take defined rules for displacement into account in the task parameters for each of the zones.

5. Control device according to one of Claims 1 to 4, **characterised in that** each mobile apparatus (300) includes at least one actuator (371, 372, 373) capable of carrying out various jobs, and **characterised in that** the control module (253) transmits to the mobile apparatus an indicator of the job to be carried out with the displacement command.

6. Control device according to one of Claims 1 to 5, **characterised in that** the base station (200) includes means for connection (201) to a data-processing network (202, 30) and a server (254) programmed to enable, locally or remotely, the establishment and the updating of the topographical definition of the terrain or of the task parameters as well as the maintenance of the device.

7. Control device according to one of Claims 1 to 6, **characterised in that** the base station includes, in addition, branching means (211) cooperating with conjugate branching means (311) carried by each mobile apparatus (300) and suitable to ensure the recharging of the power source (310) of the mobile apparatus, and **characterised in that** the travelling strategy worked out by the set-point module (252) takes account of a state of said power source in order to optimise the displacements of the mobile apparatus.

8. Control device according to one of Claims 1 to 7, **characterised in that** the means for displacement of the mobile apparatus include two independent lateral drive wheels (362) placed on either side of an axis of displacement of the mobile apparatus, each driven by an electric motor (361), and **characterised in that** the displacement command emitted by the base station includes a control of the power applied to each motor.

9. Control device according to one of Claims 1 to 8, **characterised in that** the mobile apparatus (300) includes sensors (340) that are suitable to detect the presence of obstacles (130, 131) in its near environment and means (330) that are suitable to transmit information relating to the presence of obstacles to the base station (200).

10. Control device according to Claim 9, **characterised in that** the mobile apparatus (300) includes, in addition, local control means (350) reacting to the presence of obstacles, in order to apply a safety strategy.

11. Control device according to Claim 9, **characterised in that** the set-point module (252) of the base station (200) is suitable to update the topographical definition of the terrain as a function of the obstacles detected by the mobile apparatus.

12. Control device according to one of Claims 1 to 11, **characterised in that** it includes a plurality of mobile apparatuses (300a, 300b, 300c), and **characterised in that** the base station (200) is suitable to calculate the position of each mobile apparatus and to coordinate the displacement commands to be applied by each mobile apparatus.

13. Control device according to one of Claims 1 to 12, **characterised in that** the positioning module (251) of the base station (200) is suitable to detect a degradation of the satellite signal received by a mobile GNSS receiver (320) from the raw GNSS information transmitted by said receiver and to transmit, in return, commands for adjustment of said receiver.

14. Control device according to Claim 1, **characterised in that** the positioning module (251) of the base station (200) is suitable to calculate an uncertainty of positioning affecting the position of a mobile apparatus (300) from the raw GNSS information transmitted by said apparatus and to modify the transmitted displacement command as a function of this uncertainty.

15. Control device according to Claim 1, **characterised in that** the mobile apparatus is a lawnmower.
